(19) **Europäisches Patentamt / European Patent Office / Office européen des brevets**

(11) **EP 3 632 771 A1**

(12) **EUROPEAN PATENT APPLICATION**
published in accordance with Art. 153(4) EPC

(43) Date of publication:
**08.04.2020 Bulletin 2020/15**

(21) Application number: **17910690.1**

(22) Date of filing: **10.08.2017**

(51) Int Cl.:
**B62B 7/06** *(2006.01)*

(86) International application number:
**PCT/CN2017/096830**

(87) International publication number:
**WO 2018/214292 (29.11.2018 Gazette 2018/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.05.2017 CN 201720573453 U**

(71) Applicants:
• **Unique Product & Design Co., Ltd.**
**Tainan City 710 (TW)**

• **Dongguan Wenjian Golf Products Co., Ltd.**
**Dongguan, Guangdong 523660 (CN)**

(72) Inventor: **CHENG, Chih-ching**
**Tainan City 710**
**Taiwan (TW)**

(74) Representative: **Michalski Hüttermann & Partner**
**Patentanwälte mbB**
**Speditionstraße 21**
**40221 Düsseldorf (DE)**

(54) **STROLLER**

(57) A stroller. The stroller comprises: an upper frame (2), a lower frame (1), a rear wheel frame (3), and at least one foldable joint mechanism (100); the foldable joint mechanism (100) is disposed among the upper frame (2), the lower fame (1), and the rear wheel frame (3), and comprises: a lower frame joint (10) connected to one end of the lower frame (1) and including a first row of teeth (14), an upper frame joint (20) connected to one end of the upper frame (2) and including a second row of teeth (24), a rear wheel frame joint (30) connected to one end of the rear wheel frame (3), and a linkage gear unit (4) disposed between the upper frame joint (20) and the lower frame joint (10) and including a first flower gear (41) and a second flower gear (42); the first flower gear (41) and the second flower gear (42) rotate in coaxial fashion, and are respectively meshed with the first row of teeth (14) and the second row of teeth (24); the first flower gear (41) has N1 teeth, the second flower gear (42) has N2 teeth, and N1 and N2 are each greater than or equal to 6. Strength of the flower gears is increased, the service life is prolonged, and a freedom degree and flexibility of gear design are improved.

FIG. 3

EP 3 632 771 A1

## Description

## BACKGROUND OF THE INVENTION

### 1. Field of the Invention

The present disclosure provides a stroller, in particular a baby stroller and a golf trolley having three or more wheels, especially for foldable joint mechanisms on the left and right sides of the stroller .

### 2. Description of the Related Art

The stroller of the present disclosure generally includes a baby stroller and a golf trolley having three or more wheels. In the present disclosure, the stroller is in particular a baby stroller. Consequently, a baby stroller having four wheels is explained as the representative embodiment hereinafter.

In the prior art, gears having fewer gear teeth are applied in a large number of baby strollers. Although the structure thereof is simple, there are the following drawbacks and corresponding improvements needed.

1. While the baby stroller is being unfolded or folded, the rotation angle of the baby stroller is a constant value. When a small gear meshes with internal and external gears of the rotatable members, the contact ratio of the small gear is definitely lower due to its fewer gear teeth. Since the contact ratio is lower, each tooth bears greater stress. Therefore, when the external force (including the rotational force produced in the folding or unfolding process) is applied to the folding joint, the gear gets broken more easily, which diminishes the service life of the gear.

2. Furthermore, the commonly used gears disposed in strollers are complete gears. That is, 360 degrees (360°) is divisible by the angle between each two adjacent tooth tips in a complete gear. The design insidiously limits the angle between the lower frame and the rear wheel frame and does not provide the function of free adjustment, which significantly affects the degree of freedom and flexibility of the product design.

## SUMMARY OF THE INVENTION

The purposes of the present disclosure are firstly to provide a stroller with increased strength of gears for elongating service life of the stroller, and secondly to provide a stroller with adjustable angle of frames thereof for enhancing the degree of freedom and flexibility of the product design.

To achieve the aforementioned purposes, the stroller provided by the present disclosure includes an upper frame, a lower frame, a rear wheel frame and at least one foldable joint mechanism; the foldable joint mechanism is disposed among the upper frame, the lower frame and the rear wheel frame, and includes: a lower frame joint connected to an end of the lower frame, the lower frame joint including a first opening, and a periphery of first opening being provided with a first row of teeth; an upper frame joint connected to an end of the upper frame, the upper frame joint including a second opening, and a periphery of the second opening being provided with a second row of teeth; a rear wheel frame joint connected to an end of the rear wheel frame; and a linkage gear unit disposed between the lower frame joint and the upper frame joint, the linkage gear unit including a first flower gear and a second flower gear, the first flower gear and the second flower gear rotating coaxially, and the first flower gear meshing with the first row of teeth, and the second flower gear meshing with the second row of teeth; wherein the first flower gear having a number of teeth N1, the second flower gear having a number of teeth N2, and the N1 and N2 are both greater than or equal to six.

The aforementioned stroller is particularly a baby stroller or a golf trolley having three or more wheels.

The aforementioned first row of teeth includes a first axial center, a first tooth and a second tooth, the second tooth is adjacent to the first tooth, the first tooth includes a first endpoint, a first virtual line is a straight line connecting the first endpoint and the first axial center, the second tooth includes a second endpoint, a second virtual line is a straight line connecting the second endpoint and the first axial center, and the second virtual line and the first virtual line define a first included angle $\theta 1$; the second row of teeth includes a second axial center, a third tooth and a fourth tooth, the fourth tooth is adjacent to the third tooth, the third tooth includes a third endpoint, a third virtual line is a straight line connecting the third endpoint and the second axial center, the fourth tooth includes a fourth endpoint, a fourth virtual line is a straight line connecting the fourth endpoint and the second axial center, the third virtual line and the fourth virtual line define a second included angle $\theta 2$, and the first and second row of teeth include the numbers of teeth N3 and N4, respectively; the upper frame extends outwardly toward a first direction, the lower frame extends outwardly toward a second direction, the rear wheel frame extends outwardly toward a third direction, the second direction and the third direction define a third included angle $\theta 3$, the third direction and the first direction define a fourth included angle $\theta 4$, and the numbers of teeth N1, N2, angle $\theta 1$, angle $\theta 2$ meet the following relations:

$$360/\theta 1 = N3, \; \theta 1 > 0;$$

$$360/\theta 2 = N4, \; \theta 2 > 0;$$

$$(N2/N4)*(N3/N1)= \theta 4/\theta 3,$$

and wherein angle $\theta 3$ and angle $\theta 4$ both fall within a range of 30°-150°

At least one of the numbers of teeth N3 and N4 of the first and second row of teeth is not a positive integer.

The aforementioned numbers of teeth N1 and N2 of the first and second flower gears are both positive integers.

The sum of the aforementioned third included angle $\theta 3$ and the fourth included angle $\theta 4$ falls within a range of 120°-240°.

The aforementioned first flower gear and the second flower gear separate from each other.

The aforementioned first flower gear and the second flower gear are fixedly connected.

The aforementioned linkage gear unit further comprises a base disposed between the first flower gear and the second flower gear, and the diameter of the base is greater than the diameter of the first flower gear.

In a preferable embodiment of the present disclosure, the stroller includes an upper frame extending outwardly toward a first direction; a lower frame extending outwardly toward a second direction; a rear wheel frame extending outwardly toward a third direction; at least one foldable joint mechanism disposed among the upper frame, the lower frame and the rear wheel frame, and including a lower frame joint connected to an end of the lower frame, and the lower frame joint including a first opening, and a periphery of the first opening being provided with a first row of teeth; an upper frame joint connected to an end of the upper frame, the upper frame joint including a second opening, and a periphery of the second opening being provided with a second row of teeth; a rear wheel frame joint connected to an end of the rear wheel frame; and a linkage gear unit disposed between the lower frame joint and the upper frame joint, the linkage gear unit including a first flower gear and a second flower gear, the first flower gear and the second flower gear rotating coaxially, and the first flower gear meshing with the first row of teeth, and the second flower gear meshing with the second row of teeth, the first flower gear having a number of teeth N1, the second flower gear having a number of teeth N2, the first row of teeth includes a first axial center, a first tooth and a second tooth, the second tooth is adjacent to the first tooth, the first tooth includes a first endpoint, a first virtual line is a straight line connecting the first endpoint and the first axial center, the second tooth includes a second endpoint, a second virtual line is a straight line connecting the second endpoint and the first axial center, and the second virtual line and the first virtual line define a first included angle $\theta 1$; the second row of teeth includes a second axial center, a third tooth and a fourth tooth, the fourth tooth is adjacent to the third tooth, the third tooth includes a third endpoint, a third virtual line is a straight line connecting the third endpoint and the second axial center, the fourth tooth includes a fourth endpoint, a fourth virtual line is a straight line connecting the fourth endpoint and the second axial center, the third virtual line and the fourth virtual line define a second included angle $\theta 2$, and the first and second row of teeth include the numbers of teeth N3 and N4, respectively; the second direction and the third direction define a third included angle $\theta 3$, the third direction and the first direction define a fourth included angle $\theta 4$, and wherein the numbers of teeth N1, N2, angle $\theta 1$, angle $\theta 2$ meet the following relations:

$$360/\theta 1=N3, \theta 1>0 \; ;$$

$$360/\theta 2=N4, \theta 2>0 \; ;$$

$$(N2/N4)*(N3/N1)= \theta 4/\theta 3,$$

and angle $\theta 3$ and angle $\theta 4$ both fall within a range of 30°-150°

At least one of t N3 and N4 is not a positive integer, and N1 and N2 are positive integers, and angle $\theta 3$ and angle $\theta 4$ fall within a range of 30°-150° .

The aforementioned stroller is particularly a baby stroller or a golf trolley having three or more wheels.

Both of the aforementioned numbers of teeth N1 and N2 of the first and second flower gears are greater than or equal to 6.

The aforementioned first direction, the second direction and the third direction of the lower frame, the upper frame and the rear wheel frame are different directions.

The sum of the aforementioned third included angle $\theta 3$ and the fourth included angle $\theta 4$ falls within a range of 120°-240°.

The aforementioned first flower gear and the second flower gear may be independently separated apart from each other.

The aforementioned first flower gear and the second flower gear may be fixedly connected together.

The aforementioned linkage gear unit further comprises a base disposed between the first flower gear and the second flower gear, and the diameter of the base is greater than the diameter of the first flower gear.

The advantages of the present disclosure are:

    1. When the angle of rotation in the unfolding the folding process is unchanged, the contact ratio of the flower gear and the row of teeth is increased since the numbers of teeth N1 and N2 of the first and second flower gears 41 and 42 are greater than or equal to 6. Not only more flower gears are provided for supporting, but also each tooth bears significantly less stress. The strength of the flower gears is increased, and hence the service life of the flower gears is elongated.

2. Not only the first and second flower gears 41 and 42 rotate coaxially, but also the number of teeth and the modulus of gear thereof may be variable due to the condition that the numbers of teeth of the first and second flower gears 41 and 42 are greater than or equal to 6. The degree of freedom and flexibility of the gear design are significantly enhanced.

3. Since at least one of the first and second row of teeth 14 and 24 is an incomplete tooth, the included angle $\theta 1$ defined between the lower frame 1 and the rear wheel frame 3 may be freely changed or adjusted, the degree of freedom and flexibility of the frame design are significantly enhanced.

## BRIEF DESCRIPTION OF THE DRAWINGS

FIG. 1 depicts a stereogram of the present disclosure in an unfolded state.

FIG. 2 depicts a stereogram of a rear side of the foldable joint mechanism of FIG. 1.

FIG. 3 depicts an exploded view of the foldable joint mechanism of FIG. 1.

FIG. 4 depicts an enlarged view of a portion of the linkage gear unit of FIG. 3.

FIG. 5 depicts a cross-sectional view of the foldable joint mechanism of FIG. 1 in a combination state.

FIG. 6 depicts a schematic view of another side of the foldable joint mechanism of FIG. 1.

FIG. 7 depicts an enlarged view of a portion of the first row of teeth of the lower frame joint of FIG. 3.

FIG. 8 depicts an enlarged view of a portion of the second row of teeth of the upper frame joint of FIG. 3.

FIG. 9 depicts a side view showing the included angles between the frames of the present disclosure in an unfolded state.

FIG. 10 depicts a stereogram of a linkage gear unit in accordance with the second embodiment of the present disclosure.

FIG. 11 depicts a stereogram of a linkage gear unit in accordance with the third embodiment of the present disclosure.

FIG. 12 depicts a stereogram of another side of the linkage gear unit in accordance with the third embodiment of the present disclosure.

FIGS. 13a-13d depict variable design aspects of the first and second tooth units of the present disclosure.

FIGS. 14a-14b depict another two design aspects of the first and second tooth units of the present disclosure.

Reference numerals of the accompanying drawings: lower frame 1; lower frame joint 10; front wheel 11; notch 12, 22, 32; opening 13, 23; row of teeth 14, 24; axial center 140, 240; tooth 141, 142, 243, 244; upper frame 2; upper frame joint 20; handle 21; rear wheel frame 3; rear wheel frame joint 30; rear wheel 31; screw member 33; linkage gear unit 4, 4', 4"; flower gear 41, 42, 43, 44, 45, 46; pin 40; base 47; notch 471; control mechanism 5; clasp 6; foldable joint mechanism 100; endpoint P1, P2, P3, P4; virtual line L1, L2, L3, L4; included angle $\theta 1$, $\theta 2$, $\theta 3$, $\theta 4$; number of teeth N1, N2, N3, N4; direction d1, d2, d3.

## DESCRIPTION OF THE PREFERRED EMBODIMENTS

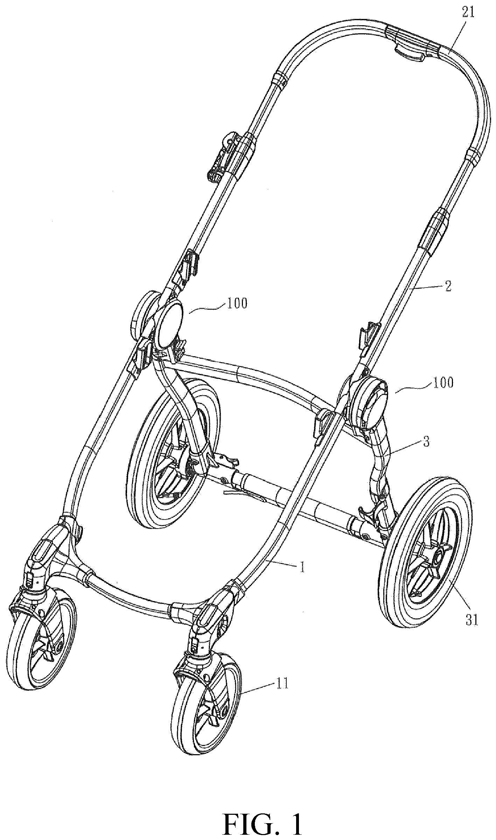

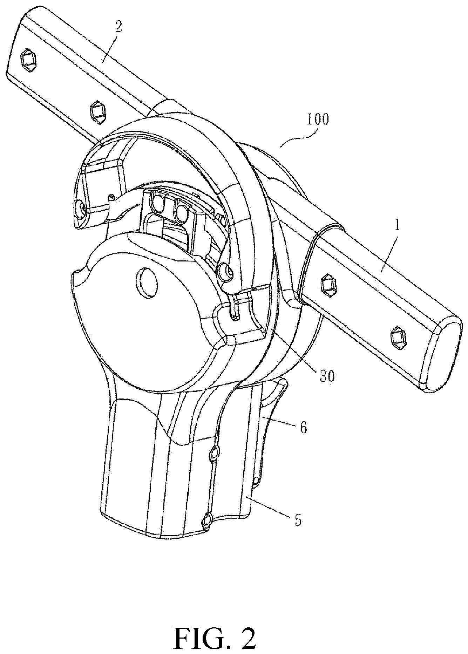

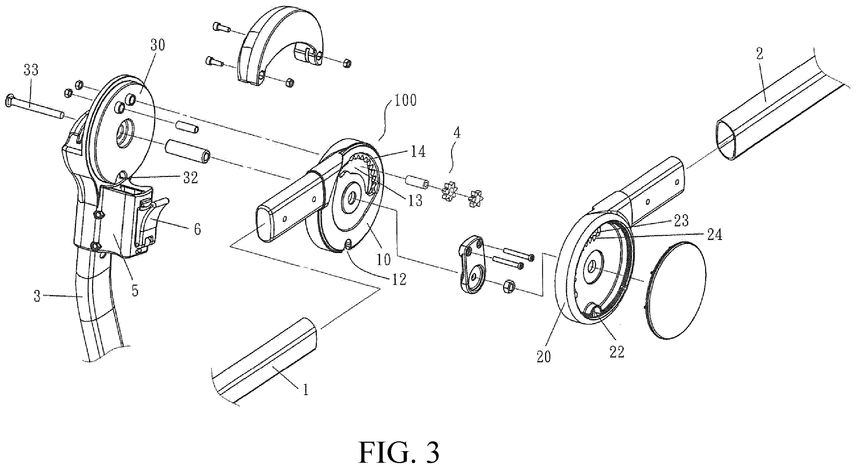

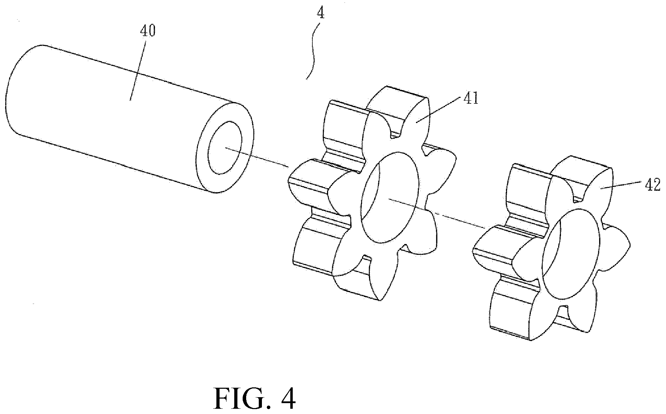

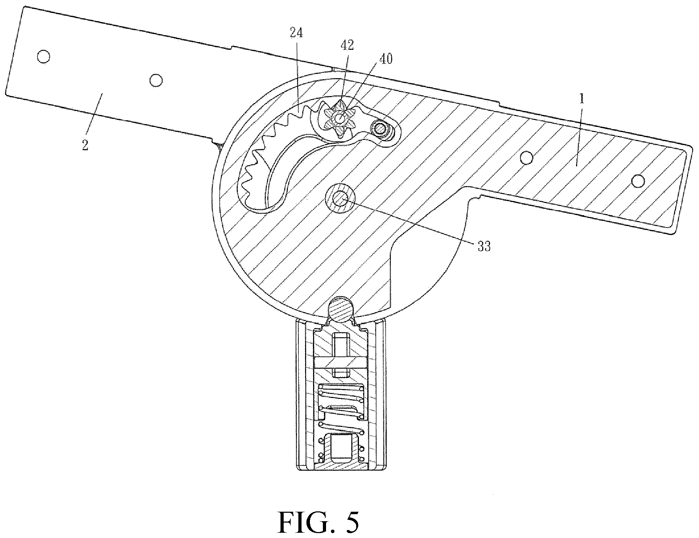

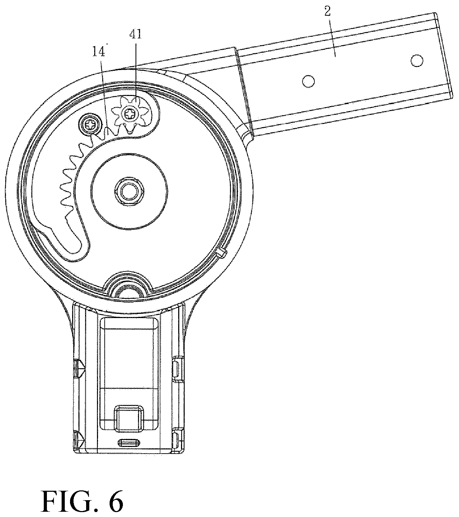

Referring to FIGS. 1 to 6 together, the present disclosure includes the lower frame 1, the upper frame 2, the rear wheel frame 3 and at least one foldable joint mechanism 100, wherein:
The bottom of the lower frame 1 is at least provided with a front wheel 11, and the top of the lower frame 1 is provided with a lower frame joint 10. The lower side of the outside periphery of the lower frame joint 10 is provided with the notch 2 , and the upper side of the inside of the lower frame joint 10 is provided with the first opening 13. The periphery (upper side periphery) of the first opening 13 is provided with the first row of teeth 14.
The top of the upper frame 2 is provided with a handle 21, and the bottom of the upper frame 2 is provided with the upper frame joint 20. The lower side of the outside periphery of the upper frame joint 20 is provided with the notch 22, and the upper side of the inside of the upper frame joint 20 is provided with the second opening 23. The periphery (lower side periphery) of the second opening 23 is provided with the second row of teeth 24.
The bottom of the rear wheel frame 3 is provided with at least one rear wheel 31, and the top of the rear wheel frame 3 is provided with at least one rear wheel frame joint 30. The lower side of the outside periphery of the rear wheel frame joint 30 is provided with the notch 32.
The at least one foldable joint mechanism 100 is disposed among the lower frame 1, the upper frame 2 and the rear wheel frame 3, and includes the lower frame joint 10, the upper frame joint 20, the rear wheel frame joint 30 and the linkage gear unit 4. The linkage gear unit 4 is disposed between the lower frame joint 10 and the upper frame joint 20 and includes the first flower gear 41 and the second flower gear 42 apart from the first flower gear 41. The first flower gear 41 and the second flower gear 42 are axially mounted to one side of the rear wheel frame joint 30 via the pin 40 and hence rotatable coaxially. The first flower gear 41 is positioned to mesh the first row of teeth 14 of the lower frame joint; the second flower gear 42 is positioned to mesh the second row of teeth 24 of the upper frame joint; wherein the numbers of teeth N1 and N2 of the first flower gear 41 and 42 both are greater than or equal to 6, and both are positive integers. For instance, in the present embodiment, the number of teeth of the first flower gear 41 may be seven, and the number of teeth of the second flower gear 42 may be six.

The aforementioned at least one foldable joint mechanism 100 includes the left-side and right-side foldable joint mechanisms. The left-side and right-side foldable joint mechanisms have the same structure. One of the foldable joint mechanisms is the mirror image of the other one. Consequently, although the following content depicts the foldable joint mechanism in a singular manner (single-side manner), both the left-side and the right-side foldable joint mechanisms are included.

The lower frame joint 10, the upper frame joint 20 and the rear wheel frame joint 30 are screwed, combined and locked fixedly via the fixing screw member 33, for example a screw, so that the lower frame joint 10 is located between the upper frame joint 20 and the rear wheel frame joint 30. Further, the notches 12, 22, 32 thereof are linearly arranged, and the first and second row of teeth 14, 24 mesh with the linkage gear unit 4 to form a gear set.

The at least one foldable joint mechanism 100 includes the control mechanism 5 and the clasp 6 respectively positioned at the front and rear ends of the rear wheel frame joint 30. When the frame of the baby stroller is unfolded, the control mechanism 5 forms a first latch for locking and the clasp 6 further forms a second safety lock to prevent the baby stroller from unintended folding.

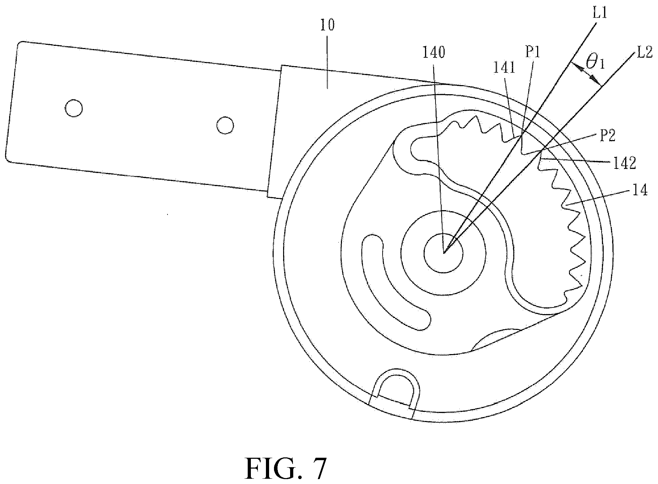

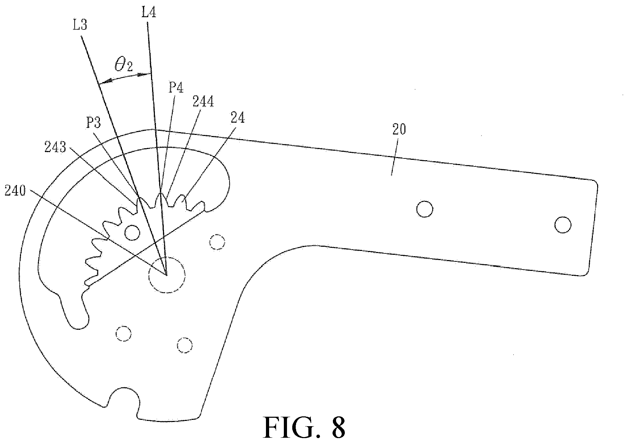

Please refer to FIGS. 7 and 8. The first row of teeth 14 of the lower frame joint includes the first axial center 140, the first tooth 141 and the second tooth 142 respectively. The second tooth 142 is adjacent to the first tooth 141. The first tooth 141 includes the first endpoint P1. The first virtual line L1 is the straight line connecting the first endpoint P1 and the first axial center 140. The second tooth 142 includes a second endpoint P2. The second virtual line L2 is the straight line connecting the second endpoint P2 and the first axial center 140. The second virtual line L2 and the first virtual line L1 define the first included angle θ1. The second row of teeth 24 includes the second axial center 240, the third tooth 243 and the fourth tooth 244 respectively. The fourth tooth 244 is adjacent to the second tooth 243 . The third tooth 243 includes the third endpoint P3 and the third virtual line L3 is the straight line connecting the third endpoint P3 and the second axial center 240. The fourth tooth 244 includes the fourth endpoint P4 and the fourth virtual line L4 is the straight line connecting the fourth end pint P4 and the second axial center 240. The third virtual line L3 and the fourth virtual line L4 define the second included angle θ2.

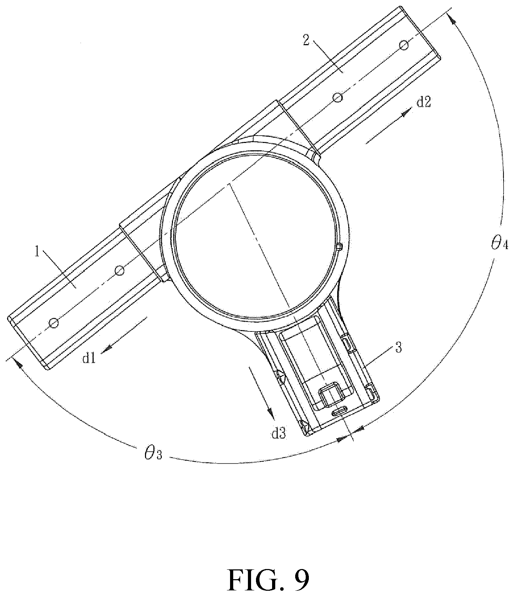

As shown in FIGS. 1 and 9, when the frames of the stroller are fully unfolded, the upper frame 2 extends outwardly toward a first direction d1, the lower frame 1 extends outwardly toward a second direction d2 and the rear wheel frame 3 extends outwardly toward a third direction d3. The second direction d2 and the third direction d3 define the third included angle θ3, and the third direction d3 and the first direction d1 define the fourth included angle θ4.

According to the aforementioned structure, the gear design of the at least one foldable joint mechanism 100 of the present disclosure must meet the following relations:

$$360/\theta1 = N3, \ \theta1 > 0;$$

$$360/\theta2 = N4, \ \theta2 > 0;$$

$$(N2/N4)*(N3/N1) = \theta4/\theta3;$$

and
wherein N3 is the number of teeth of the first row of teeth 14, and N4 is the number of teeth of the second row of teeth 24; the numbers of teeth N1 and N2 of the first and second flower gears 41 and 42 are both positive integers; at least one of the numbers of teeth N3 and N4 of the first and second row of teeth 14 and 24 is not a positive integer. The third included angle θ3 and the fourth included angle θ4 fall within a range of 30-150 degrees, and the sum of θ3 and θ4 falls within a range of 120-240 degrees. When the sum of the two included angles falls within this range, the stroller has a more stable angle while fully unfolded.

In one example, when the design condition is that θ3=80°, θ4=100°, N1=7, N2=6 and N3=30, the term N4 equals 20.57 according to the aforementioned relations, wherein N4 indicates an incomplete gear. In another example, when the design condition is that θ3=80°, θ4=100°, N1=10, N2=8 and N3=40.87, the term N4 equals 26.16 according to the aforementioned relations, wherein N3 and N4 both indicate an incomplete gear. In still another example, when the design condition is that θ3=85°, θ4=95°, N1=11, N2=7 and N4=25, the term N3 equals 43.9 according to the aforementioned relations, wherein N3 indicates an incomplete gear. Therefore, according to the design provided in the present disclosure, the degree of freedom and flexibility of the product design are significantly enhanced.

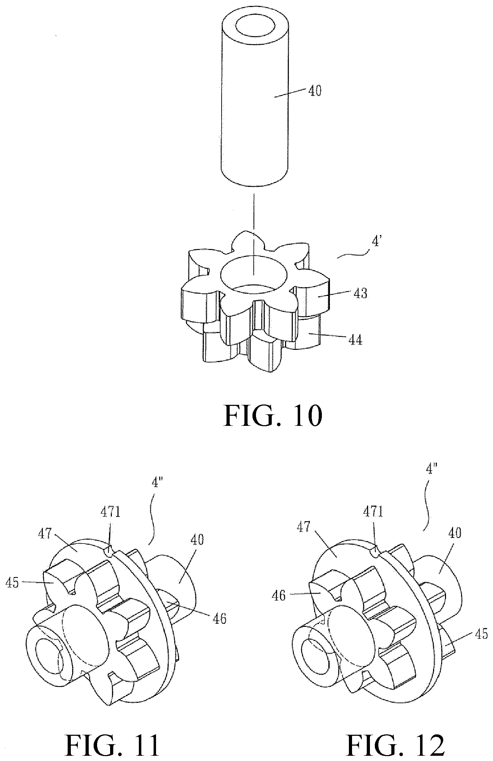

Referring to FIG. 10, which depicts the second embodiment of the linkage gear unit described above. The linkage gear unit 4' of the present embodiment is composed of the first and second flower gears 43 and 44, which are mounted via the pin 40 and hence rotatable coaxially. The first and second flower gears 43 and 44 may be fixedly connected to each other by welding or some other manners for rotating together as a unit on the pin 40, wherein the number of teeth of the first flower gear 43 is seven and the number of teeth of the second flower gear 44 is six so as to achieve the same efficacy as the abovementioned first embodiment.

Please further refer to FIG. 11 together with FIG. 12, which depict the third embodiment of the linkage gear unit. The linkage gear unit 4" includes the first and second flower gears 45 and 46, the base 47 disposed between the first and second flower gears 45 and 46, and the pin 40 configured to pass and mount the first and second flower gears 45 and 46 and the base 47, wherein the diameter of the base 47 is greater than that of the first and second flower gears 45 and 46, and the base 47 includes the notch 471 thereon for identification of positioning during installation, so as to achieve the same efficacy as the above mentioned first embodiment.

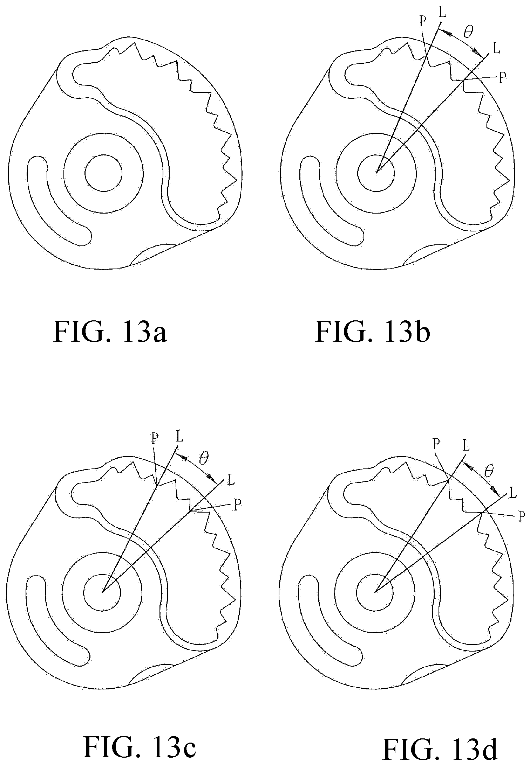

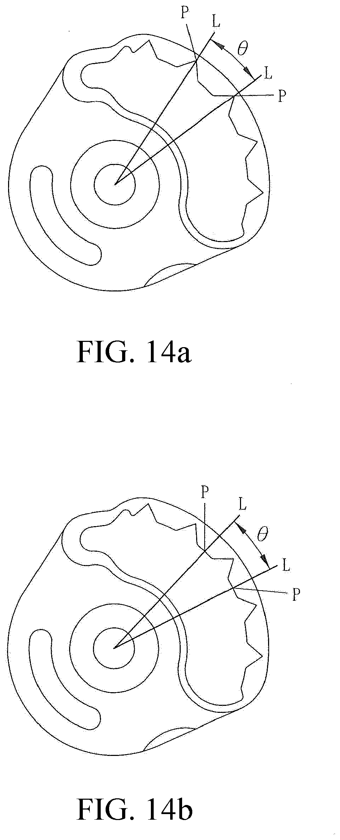

Please further refer to FIGS. 13a-13d and 14a-14b, which depict variable design aspects of the first tooth and the second tooth of the first and second row of teeth of the present disclosure. Those aspects are embodied for the purpose of depicting the first tooth and the second tooth. Here, the concept of two adjacent teeth can be presented as the first tooth unit and the second tooth unit adjacent to the first tooth unit as long as the two adjacent teeth include representative endpoints P and virtual lines L repetitively shown. As shown in FIG. 13a, the first tooth unit includes one larger tooth and one smaller tooth, and the second tooth unit and the first tooth unit are repetitive and periodic design. Here, the included angle $\theta$ of the tooth units is calculated from the repeated points of the first tooth unit and the second tooth unit . That is, any condition having a periodic unit for effective contact would conform the disclosure provided in the present application.

**Claims**

1. A stroller, comprising:

   an upper frame (2);
   a lower frame (1);
   a rear wheel frame (3); and
   at least one foldable joint mechanism (100), disposed among the upper frame (2), the lower frame (1) and the rear wheel frame (3), comprising:

      a lower frame joint (10), connected to an end of the lower frame (1), the lower frame joint (10) including a first opening (13), and a periphery of the first opening (13) being provided with a first row of teeth (14);
      an upper frame joint (20), connected to an end of the upper frame (2), the upper frame joint (20) including a second opening (23), and a periphery of the second opening (23) being provided with a second row of teeth (24);
      a rear wheel frame joint (30), connected to an end of the rear wheel frame (3); and
      a linkage gear unit (4), disposed between the lower frame joint (10) and the upper frame joint (20), the linkage gear unit (4) including a first flower gear (41) and a second flower gear (42), the first flower gear (41) and the second flower gear (42) rotating coaxially, and the first flower gear (41) meshing with the first row of teeth (14), and the second flower gear (42) meshing with the second row of teeth (24);

   wherein the first flower gear (41) has a number of teeth N1, the second flower gear (42) has a number of teeth N2, and the N1 and N2 are greater than or equal to six.

2. The stroller of claim 1, wherein the stroller is particularly a baby stroller or a golf trolley having three or more wheels.

3. The stroller of any one of the preceding claims, wherein the first row of teeth (14) includes a first axial center (140), a first tooth (141) and a second tooth (142), the second tooth (142) is adjacent to the first tooth (141), the first tooth (141) includes a first endpoint (P1), a first virtual line (L1) is a straight line connecting the first endpoint (P1) and the first axial center (140), the second tooth (142) includes a second endpoint (P2), a second virtual line (L2) is a straight line connecting the second endpoint (P2) and the first axial center (140), and the second virtual line (L2) and the first virtual line (L1) define a first included angle $\theta1$; the second row of teeth (24) includes a second axial center (240), a third tooth (243) and a fourth tooth (244), the fourth tooth (244) is adjacent to the third tooth (243), the third tooth (243) includes a third endpoint (P3), a third virtual line (L3) is a straight line connecting the third endpoint (P3) and the second axial center (240), the fourth tooth (244) includes a fourth endpoint (P4), a fourth virtual line (L4) is a straight line connecting the fourth endpoint (P4) and the second axial center (240), the third virtual line (L3) and the fourth virtual line (L4) define a second included angle $\theta2$, and the first and second row of teeth (14, 24) include the numbers of teeth N3 and N4, respectively; the upper frame (2) extends outwardly toward a first direction (d1), the lower frame (1) extends outwardly toward a second direction (d2), the rear wheel frame (3) extends outwardly toward a third direction (d3), the second direction (d2) and the third direction (d3) define a third included angle θ3, the third direction (d3) and the first direction (d1) define a fourth included angle θ4, and the numbers of teeth N1, N2, angle θ1, angle θ2 meet the following relations:

$$360/\theta1=N3,\ \theta1>0;$$

$$360/\theta2=N4,\ \theta2>0;$$

and

$$(N2/N4)*(N3/N1)= \theta4/\theta3,$$

and wherein angle θ3 and angle θ4 fall within a range of 30°-150°.

4. The stroller of claim 3, wherein the numbers of teeth N1 and N2 of the first and second flower gears (41, 42) are positive integers.

5. The stroller of claim 3, wherein at least one of the numbers of teeth N3 and N4 of the first and second row of teeth (14, 24) is not a positive integer.

6. The stroller of claim 3, wherein the sum of the third included angle θ3 and the fourth included angle θ4 falls within a range of 120°-240°.

7. The stroller of any one of the preceding claims, wherein the first flower gear (41) and the second flower gear (42) are separated from each other.

8. The stroller of any one of claims 1-6, wherein the first flower gear (41) and the second flower gear (42) are fixedly connected.

9. The stroller of any one of the preceding claims, wherein the linkage gear unit (4) further comprises a base (47) disposed between the first tooth (141) and the second flower gear (42), and the diameter of the base (47) is greater than the diameter of the first flower gear (41).

10. The stroller of claim 8, wherein the base (47) includes a notch (471).

11. A stroller, comprising:

an upper frame (2), extending outwardly toward a first direction (d1);
a lower frame (1), extending outwardly toward a second direction (d2);
a rear wheel frame (3), extending outwardly toward a third direction (d3);
at least one foldable joint mechanism (100), disposed among the upper frame (2), the lower frame (1) and the rear wheel frame (3), and comprising:

a lower frame joint (10), connected to an end of the lower frame (1), and the lower frame joint (10) including a first opening (13), and a periphery of the first opening (13) being provided with a first row of teeth (14); an upper frame joint (20), connected to an end of the upper frame (2), the upper frame joint (20) including a second opening (23), and a periphery of the second opening (23) being provided with a second row of teeth (24); a rear wheel frame joint (30), connected to an end of the rear wheel frame (3); and a linkage gear unit (4), disposed between the lower frame joint (10) and the upper frame joint (20), the linkage gear unit (4) including a first flower gear (41) and a second flower gear (42), the first flower gear (41) and the second flower gear (42) rotating coaxially, and the first flower gear (41) meshing with the first row of teeth (14), and the second flower gear (42) meshing with the second row of teeth (24), the first flower gear (41) having a number of teeth N1, the second flower gear (42) having a number of teeth N2, the first row of teeth (14) includes a first axial center (140), a first tooth (141) and a second tooth (142), the second tooth (142) is adjacent to the first tooth (141), the first tooth (141) includes a first endpoint (P1), a first virtual line (L1) is a straight line connecting the first endpoint (P1) and the first axial center (140), the second tooth (142) includes a second endpoint (P2), a second virtual line (L2) is a straight line connecting the second endpoint (P2) and the first axial center (140), and the second virtual line (L2) and the first virtual line (L1) define a first included angle θ1; the second row of teeth (24) includes a second axial center (240), a third tooth (243) and a fourth tooth (244), the fourth tooth (244) is adjacent to the third tooth (243), the third tooth (243) includes a third endpoint (P3), a third virtual line (L3) is a straight line connecting the third endpoint (P3) and the second axial center (240), the fourth tooth (244) includes a fourth endpoint (P4), a fourth virtual line (L4) is a straight line connecting the fourth endpoint (P4) and the second axial center (240), the third virtual line(L3) and the fourth virtual line (L4) define a second included angle θ2, and the first and second row of teeth (14, 24) include the numbers of teeth N3 and N4, respectively; the upper frame (2) extends outwardly toward a first direction (d1), the lower frame (1) extends outwardly toward a second direction (d2), the rear wheel frame (3) extends outwardly toward a third direction (d3), the second direction (d2) and the third direction (d3) define a third included angle θ3, the third direction (d3) and the first direction (d1) define a fourth included angle θ4, and the numbers of teeth N1, N2, angle θ1, angle θ2 meet the following relations:

$$360/θ1=N3, θ1>0;$$

$$360/θ2=N4, θ2>0;$$

and

$$(N2/N4)*(N3/N1)= θ4/θ3,$$

and wherein angle θ3 and angle θ4 fall within a range of 30°-150°;

wherein at least one of N3 and N4 is not a positive integer, and N1 and N2 are positive integers, and angle θ3 and angle θ4 fall within a range of 30°-150° .

12. The stroller of claim 11, wherein the stroller is particularly a baby stroller or a golf trolley having three or more wheels.

13. The stroller of any one of claims 11-12, wherein the numbers of teeth N1 and N2 of the first and second flower gears (41, 42) are greater than or equal to 6.

14. The stroller of any one of claims 11-12, wherein the first direction (d1), the second direction (d2) and the third direction (d3) are different directions.

15. The stroller of any one of claims 11-12, wherein the sum of the third included angle and the fourth included angle falls within a range of 120°-240°.

16. The stroller of any one of claims 11-15, wherein the first flower gear (41) and the second flower gear (42) are independently separated apart from each other.

17. The stroller of any one of claims 11-15, wherein the first flower gear (41) and the second flower gear (42) are fixedly connected together.

18. The stroller of any one of claims 11-17, wherein the linkage gear unit (4) further comprises a base (47) disposed between the first flower gear (41) and the second flower gear (42), and the diameter of the base (47) is greater than the diameter of the first flower gear (41).

19. The stroller of claim 18, wherein the base (47) includes a notch (471).

FIG. 1

FIG. 2

FIG. 3

FIG. 4

**FIG. 5**

FIG. 6

FIG. 7

FIG. 8

FIG. 9

FIG. 10

FIG. 11

FIG. 12

FIG. 13a

FIG. 13b

FIG. 13c

FIG. 13d

FIG. 14a

FIG. 14b

## INTERNATIONAL SEARCH REPORT

| International application No. |
|---|
| PCT/CN2017/096830 |

### A. CLASSIFICATION OF SUBJECT MATTER

B62B 7/06 (2006.01) i

According to International Patent Classification (IPC) or to both national classification and IPC

### B. FIELDS SEARCHED

Minimum documentation searched (classification system followed by classification symbols)

B62B 7

Documentation searched other than minimum documentation to the extent that such documents are included in the fields searched

Electronic data base consulted during the international search (name of data base and, where practicable, search terms used)

CNPAT; CNKI; WPI; EPODOC: 齿轮, 角度, 夹角, 齿, 齿数, 啮合, 啮接, 推车, gear, angle, wheel, engage+, mesh+, stroller

### C. DOCUMENTS CONSIDERED TO BE RELEVANT

| Category* | Citation of document, with indication, where appropriate, of the relevant passages | Relevant to claim No. |
|---|---|---|
| X | US 2013340205 A1 (CHUAH, KHAI GAN) 26 December 2013 (26.12.2013), description, paragraphs [0027] and [0037]-[0042], and figures 11-16 | 1-19 |
| X | CN 203864753 U (KUNSHAN VIKI CHILDREN'S PRODUCTS CO., LTD.) 08 October 2014 (08.10.2014), description, paragraphs [0009]-[0018], and figures 1-3 | 1-19 |
| A | CN 201520324 U (UNIQUE PRODUCT & DESIGN CO., LTD.) 07 July 2010 (07.07.2010), entire document | 1-19 |
| A | CN 203819304 U (DONGGUAN HENGYAO DAILY NECESSITIES CO., LTD.) 10 September 2014 (10.09.2014), entire document | 1-19 |
| A | CN 204978800 U (DONGGUAN JINWANG CHILDREN ARTICLE CO., LTD.) 20 January 2016 (20.01.2016), entire document | 1-19 |
| A | GB 2478622 A (UNIQUE PRODUCT & DESIGN CO., LTD.) 14 September 2011 (14.09.2011), entire document | 1-19 |

☐ Further documents are listed in the continuation of Box C.     ☒ See patent family annex.

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&" document member of the same patent family |

| Date of the actual completion of the international search | Date of mailing of the international search report |
|---|---|
| 16 January 2018 | 01 February 2018 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | WANG, Yanxia Telephone No. (86-10) 53960931 |

Form PCT/ISA/210 (second sheet) (July 2009)

## INTERNATIONAL SEARCH REPORT
Information on patent family members

| | International application No. |
|---|---|
| | PCT/CN2017/096830 |

| Patent Documents referred in the Report | Publication Date | Patent Family | Publication Date |
|---|---|---|---|
| US 2013340205 A1 | 26 December 2013 | CN 103523068 A | 22 January 2014 |
| | | US 9199658 B2 | 01 December 2015 |
| | | CN 103523068 B | 06 April 2016 |
| CN 203864753 U | 08 October 2014 | None | |
| CN 201520324 U | 07 July 2010 | None | |
| CN 203819304 U | 10 September 2014 | None | |
| CN 204978800 U | 20 January 2016 | None | |
| GB 2478622 A | 14 September 2011 | GB 2478622 B | 22 February 2012 |

Form PCT/ISA/210 (patent family annex) (July 2009)